# EUROPÄISCHE PATENTSCHRIFT

(11) **EP 2 797 785 B1**
(45) Veröffentlichungstag und Bekanntmachung des Hinweises auf die Patenterteilung: **17.02.2021**
(21) Anmeldenummer: 12810171.4
(22) Anmeldetag: 13.12.2012
(51) Int. Cl.: B60S 1/38

(54) **WISCHBLATTVORRICHTUNG**
WIPER BLADE DEVICE
DISPOSITIF D'ESSUIE-GLACE

(30) Priorität: 29.12.2011 DE 102011090100
(43) Veröffentlichungstag der Anmeldung: 05.11.2014
(73) Patentinhaber: Robert Bosch GmbH, 70442 Stuttgart (DE)
(72) Erfinder: DEPONDT, Helmut, 3010 Kessel-Lo (BE)
(86) Internationale Anmeldenummer: PCT/EP2012/075324
(87) Internationale Veröffentlichungsnummer: WO 2013/098081

(56) Entgegenhaltungen:
- EP-A1- 2 080 680
- DE-A1- 10 122 764
- FR-A1- 2 924 080
- KR-A- 20100 023 942
- US-A1- 2009 151 110

## Beschreibung

### Stand der Technik

Die Erfindung geht aus von einer Wischblattvorrichtung nach dem Oberbegriff des Patentanspruchs 1.

Aus der FR 2 924 080 A1 ist eine Wischblattvorrichtung mit einer Basiseinheit und einer mit einem Wischarm verbindbaren Adaptereinheit bekannt. Die Basiseinheit ist als eine zweiseitig offene Aufnahme mit einem Rastelement an einer offenen Seite der Aufnahme ausgebildet und dazu vorgesehen, die Adaptereinheit formschlüssig zu fixieren. In einem montierten Zustand ist die Basiseinheit fest mit einer Federleiste verbunden.

Dokument DE 101 22 764 A1 offenbart eine Wischblattvorrichtung mit einer Basiseinheit und einer mit einem Wischarm verbindbaren Adaptereinheit, welche in wenigstens einem montierten Zustand formschlüssig an der Basiseinheit fixiert ist.

### Offenbarung der Erfindung

Die Erfindung geht aus von einer Wischblattvorrichtung mit einer Basiseinheit und einer mit einem Wischarm verbindbaren Adaptereinheit, welche in wenigstens einem montierten Zustand formschlüssig an der Basiseinheit fixiert ist.

Es wird vorgeschlagen, dass die Wischblattvorrichtung wenigstens eine Formschlussausnehmung aufweist, welche sich zumindest von einer ersten Seitenfläche zu einer zweiten Seitenfläche der Basiseinheit oder der Adaptereinheit erstreckt. Erfindungsgemäß sind die erste Seitenfläche und die zweite Seitenfläche voneinander verschieden ausgebildet. Unter einer "Basiseinheit" soll in diesem Zusammenhang insbesondere eine Einheit verstanden werden, welche ein Fundament für die Adaptereinheit bereitstellt und welche insbesondere in wenigstens einem montierten Zustand an einer Federleiste befestigt ist. Unter einer "Federleiste" soll in diesem Zusammenhang insbesondere ein Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige Gegenkraft erzeugt, die der Veränderung entgegenwirkt. Unter einer "Erstreckung" eines Elements soll in diesem Zusammenhang insbesondere ein maximaler Abstand zweier Punkte einer senkrechten Projektion des Elements auf eine Ebene verstanden werden. Vorzugsweise besteht die Federleiste teilweise, vorzugsweise zumindest zu einem Großteil und besonders vorteilhaft vollständig aus Federstahl. Darunter, dass die Federleiste "zumindest zu einem Großteil" aus Federstahl besteht, soll insbesondere verstanden werden, dass die Federleiste mit einem Massenanteil von zumindest 50 %, insbesondere von wenigstens 70 %, vorzugsweise von mindestens 90 % und besonders vorteilhaft von zumindest 95 % aus Federstahl besteht. Vorzugsweise ist die Basiseinheit einstückig ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden wie beispielsweise durch eine Herstellung aus einem Guss und/oder durch eine Herstellung in einem Ein- oder Mehrkomponentenspritzverfahren und vorteilhaft aus einem einzelnen Rohling.

Unter einer "Adaptereinheit" soll in diesem Zusammenhang insbesondere eine Einheit verstanden werden, welche einen Kontaktbereich zu einem Wischblattbauteil, insbesondere der Basiseinheit, aufweist, insbesondere in wenigstens einem montierten Zustand mit dem Wischblattbauteil unverlierbar verbunden und dazu vorgesehen ist, einen Kopplungsbereich eines Wischblatts für eine Kopplung und/oder Kontaktierung mit dem Wischarm, insbesondere einem Wischarmadapter des Wischarms, bereitzustellen. Unter "vorgesehen" soll insbesondere speziell ausgelegt und/oder ausgestattet verstanden werden. Vorzugsweise ist die Adaptereinheit mit dem Wischarm, insbesondere dem Wischarmadapter des Wischarms, drehbar verbunden, insbesondere auch mittelbar über wenigstens ein Lagerelement. Vorzugsweise bestehen die Basiseinheit und/oder die Adaptereinheit zumindest im Wesentlichen aus Metall und/oder Kunststoff. Darunter, dass die Basiseinheit und/oder die Adaptereinheit "zumindest im Wesentlichen aus Metall und/oder Kunststoff bestehen", soll insbesondere verstanden werden, dass die Basiseinheit und/oder die Adaptereinheit mit einem Massenanteil von wenigstens 60 %, insbesondere von zumindest 70 %, vorzugsweise von mindestens 80 % und besonders vorteilhaft von wenigstens 90 % aus Metall und/oder Kunststoff bestehen. Vorzugsweise ist die Adaptereinheit einstückig ausgebildet. Darunter, dass die Adaptereinheit im montierten Zustand "formschlüssig an der Basiseinheit fixiert" ist, soll insbesondere verstanden werden, dass ein Schwerpunktsabstand und/oder eine Winkelorientierung der Adaptereinheit zur Basiseinheit im montierten Zustand durch eine Formschlussverbindung zumindest im Wesentlichen konstant sind. Darunter, dass der Schwerpunktsabstand und/oder die Winkelorientierung "zumindest im Wesentlichen konstant" sind, soll insbesondere verstanden werden, dass eine im montierten Zustand maximal mögliche relative Änderung des Schwerpunktsabstands und/oder der Winkelorientierung höchstens 15 %, insbesondere maximal 10 %, vorzugsweise höchstens 5 % und besonders vorteilhaft maximal 1 % beträgt. Unter einer "Formschlussausnehmung" soll in diesem Zusammenhang insbesondere eine Ausnehmung verstanden werden, welche wenigstens ein Formschlusselement bereitstellt. Unter einer "Ausnehmung" soll insbesondere eine Materialausnehmung in einer Baueinheit verstanden werden, welche sich insbesondere von einer ersten Oberfläche der Baueinheit, insbesondere der ersten Seitenfläche, zu einer vorzugsweise gegenüberliegenden zweiten Oberfläche der Baueinheit, insbesondere der zweiten Seitenfläche, erstreckt. Die Ausnehmung ist insbesondere als eine Randausnehmung ausgebildet.

Unter einem "Formschlusselement" soll insbesondere ein Element verstanden werden, welches in wenigstens einem montierten Zustand mit einem weiteren Formschlusselement eine formschlüssige Verbindung eingeht. Unter einer "Seitenfläche" soll insbesondere eine vorzugsweise glatte Oberfläche verstanden werden, welche insbesondere von Kanten, insbesondere auch von leicht abgerundeten Kanten, begrenzt ist und welche zu einer Haupterstreckungsebene der Basiseinheit und/oder der Adaptereinheit zumindest im Wesentlichen senkrecht steht. Hierbei soll unter einer "Kante" insbesondere ein Oberflächenbereich verstanden werden, welcher einen Krümmungsradius von höchstens 3 mm, insbesondere von maximal 2 mm, vorzugsweise von höchstens 1 mm und besonders vorteilhaft von maximal 0,5 mm aufweist. Unter einer "Haupterstreckungsebene" einer Baueinheit soll insbesondere eine Ebene verstanden werden, welche parallel zu einer größten Seitenfläche eines kleinsten geometrischen Quaders ist, welcher die Baueinheit gerade noch vollständig umschließt, und insbesondere durch den Mittelpunkt dieses Quaders verläuft. Darunter, dass die Seitenfläche zur Haupterstreckungsebene der Basiseinheit oder der Adaptereinheit "zumindest im Wesentlichen senkrecht" steht, soll insbesondere verstanden werden, dass für Normalen von Oberflächenelementen der Seitenfläche, welche zusammengenommen zumindest 60 %, insbesondere wenigstens 70 %, vorzugsweise mindestens 80 % und besonders vorteilhaft zumindest 90 % einer Gesamtfläche der Seitenfläche ausmachen, gilt, dass die Normalen mit einer Normalen der Haupterstreckungsebene jeweils einen Winkel einschließen, welcher höchstens um 5°, insbesondere um maximal 3° und vorzugsweise um höchstens 1° von einem rechten Winkel abweicht. Erfidungsgemäß handelt es sich bei den Seitenflächen um außenliegende Seitenflächen der Basiseinheit oder der Adaptereinheit. Darunter, dass sich die Formschlussausnehmung von einer ersten Seitenfläche zu einer zweiten Seitenfläche "erstreckt", soll insbesondere verstanden werden, dass wenigstens eine die erste Seitenfläche begrenzende Kante und zumindest eine die zweite Seitenfläche begrenzende Kante gleichzeitig die Formschlussausnehmung und insbesondere deren Endbereich begrenzende Kanten sind.

Durch eine solche Ausgestaltung kann eine vorteilhaft einfache Montierbarkeit erreicht werden, da eine Montage der Adaptereinheit an die Basiseinheit von beiden Seitenflächen her ermöglicht werden kann.

Erfindungsgemäß sind die erste Seitenfläche und die zweite Seitenfläche voneinander beabstandet. Darunter, dass die erste Seitenfläche und die zweite Seitenfläche "voneinander beabstandet" sind, soll insbesondere verstanden werden, dass die erste Seitenfläche und die zweite Seitenfläche frei von gemeinsamen, die Seitenflächen begrenzenden Kanten sind. Vorzugsweise sind die beiden Seitenflächen einander gegenüberliegend angeordnet. Darunter, dass die beiden Seitenflächen "einander gegenüberliegend angeordnet" sind, soll insbesondere verstanden werden, dass für jede der beiden Seitenflächen wenigstens eine Normale existiert, welche gleichzeitig beide Seitenflächen in jeweils zumindest einem Punkt schneidet. Vorzugsweise sind die beiden Seitenflächen zumindest im Wesentlichen parallel zueinander angeordnet. Darunter, dass die beiden Seitenflächen "zumindest im Wesentlichen parallel zueinander" angeordnet sind, soll insbesondere verstanden werden, dass die erste Seitenfläche durch eine reine Parallelverschiebung und/oder durch eine Spiegelung an einer Ebene auf die zweite Seitenfläche abbildbar ist. Hierdurch kann eine Montierbarkeit besonders vorteilhaft vereinfacht werden.

Vorteilhaft umfasst die Wischblattvorrichtung zumindest eine Federleiste, mit welcher die Basiseinheit in wenigstens einem montierten Zustand zumindest im Wesentlichen fest verbunden ist. Die Basiseinheit kann auf beliebige, dem Fachmann als sinnvoll erscheinende Weise mit der Federleiste fest verbunden sein, beispielsweise durch eine formschlüssige Verbindung, insbesondere eine Rastverbindung, und/oder eine stoffschlüssige Verbindung, insbesondere eine Schweißung, vorzugsweise eine Ultraschallschweißung, und/oder eine Lötung und/oder ein Verkleben. Hierdurch kann ein vorteilhaft einfaches Wischblatt mit einem insbesondere geringen Bauraumbedarf bereitgestellt werden.

In einer bevorzugten Ausgestaltung der Erfindung wird vorgeschlagen, dass wenigstens eine der zwei Seitenflächen zumindest im Wesentlichen parallel zu einer Längsrichtung der Federleiste angeordnet ist. Vorzugsweise sind beide Seitenflächen zumindest im Wesentlichen parallel zu einer Längsrichtung der Federleiste angeordnet. Unter einer "Längsrichtung" einer Einheit soll in diesem Zusammenhang insbesondere eine Richtung verstanden werden, welche parallel angeordnet ist zu einer längsten Kante eines kleinsten geometrischen Quaders, welcher die Einheit gerade noch vollständig umschließt. Darunter, dass die Seitenfläche "zumindest im Wesentlichen parallel zu einer Längsrichtung der Federleiste angeordnet" ist, soll insbesondere verstanden werden, dass für Normalen von Oberflächenelementen der Seitenfläche, welche zusammengenommen zumindest 60 %, insbesondere wenigstens 70 %, vorzugsweise mindestens 80 % und besonders vorteilhaft zumindest 90 % einer Gesamtfläche der Seitenfläche ausmachen, gilt, dass die Normalen und die Längsrichtung der Federleiste einen Winkel einschließen, welcher höchstens um 5°, insbesondere um maximal 3° und vorzugsweise um höchstens 1° von einem rechten Winkel abweicht. Hierdurch kann eine Montage besonders vorteilhaft vereinfacht werden, da insbesondere eine gute Zugänglichkeit erreicht werden kann.

In einer besonders bevorzugten Ausgestaltung der Erfindung wird vorgeschlagen, dass die Formschlussausnehmung zumindest im Wesentlichen kanalförmig ausgebildet ist. Darunter, dass die Formschlussausnehmung "zumindest im Wesentlichen kanalförmig ausgebildet" ist, soll insbesondere verstanden werden, dass die Formschlussausnehmung in einem gedachten begradigten Zustand eine Längserstreckung aufweist, welche wenigstens 1,5-mal, insbesondere zumindest 2-mal, vorzugsweise mindestens 3-mal und besonders vorteilhaft wenigstens 4-mal so groß ist wie wenigstens eine zu der Längserstreckung senkrechte Quererstreckung. Vorteilhaft erstreckt sich die zumindest im Wesentlichen kanalförmige Formschlussausnehmung zumindest im Wesentlichen parallel zur Haupterstreckungsebene der Basiseinheit und/oder der Adaptereinheit. Hierdurch kann eine vorteilhaft stabile Verbindung zwischen der Adaptereinheit und der Basiseinheit erreicht werden. Insbesondere kann eine Montage weiter vereinfacht werden. Erfindungsgemäß ist die Formschlussausnehmung zumindest im Wesentlichen als eine Schwalbenschwanzführung ausgebildet. Darunter, dass die Formschlussausnehmung "zumindest im Wesentlichen als eine Schwalbenschwanzführung ausgebildet" ist, soll insbesondere verstanden werden, dass zumindest 60 %, insbesondere wenigstens 70 %, vorzugsweise mindestens 80 % und besonders vorteilhaft zumindest 90 % aller Querschnitte der Formschlussausnehmung in Form eines vorzugsweise spiegelsymmetrischen Trapezes mit fehlender kürzester Grundseite vorliegen. Vorzugsweise sind all diese Trapeze miteinander identisch. Hierdurch kann eine besonders vorteilhafte Stabilität der Verbindung zwischen der Adaptereinheit und der Basiseinheit erzielt werden. Insbesondere kann ein im montierten Zustand auftretendes Spiel zwischen der Adaptereinheit und der Basiseinheit reduziert werden.

Ferner wird vorgeschlagen, dass die Formschlussausnehmung in wenigstens einem montierten Zustand an der Basiseinheit angeordnet ist. Vorzugsweise ist die Formschlussausnehmung als eine Ausnehmung in der vorzugsweise einstückigen Basiseinheit ausgebildet. Vorzugsweise ist dann an der Adaptereinheit ein zur Formschlussausnehmung korrespondierendes Formschlusselement angeordnet. Vorzugsweise ist das Formschlusselement einstückig an der Adaptereinheit ausgebildet. Hierdurch kann eine Konstruktion vereinfacht und eine Bauteilevielfalt reduziert werden.

Vorteilhaft umfasst die Wischblattvorrichtung eine Halteeinheit, welche in zumindest einem montierten Zustand die Adaptereinheit relativ zur Basiseinheit in zumindest einer zu wenigstens einer der Seitenflächen zumindest im Wesentlichen senkrechten Richtung wenigstens teilweise fixiert. Vorzugsweise fixiert die Halteeinheit im montierten Zustand die Adaptereinheit relativ zur Basiseinheit wenigstens teilweise in beiden, zu wenigstens einer der Seitenflächen zumindest im Wesentlichen senkrechten Richtungen. Die Halteeinheit kann zumindest ein beliebiges, dem Fachmann als sinnvoll erscheinendes Halteelement umfassen, insbesondere jedoch wenigstens ein Formschlusselement. Unter einer "zu wenigstens einer der Seitenflächen zumindest im Wesentlichen senkrechten Richtung" soll in diesem Zusammenhang insbesondere eine Richtung verstanden werden, für die gilt, dass Normalen von Oberflächenelementen der Seitenfläche, welche zusammengenommen zumindest 60 %, insbesondere wenigstens 70 %, vorzugsweise mindestens 80 % und besonders vorteilhaft zumindest 90 % einer Gesamtfläche der Seitenfläche ausmachen, mit der Richtung einen kleinsten Winkel einschließen, welcher höchstens 15°, insbesondere maximal 10°, vorzugsweise höchstens 5° und besonders vorteilhaft maximal 1° beträgt. Hierdurch kann eine zuverlässige Fixierung der Adaptereinheit an der Basiseinheit erreicht werden.

Wenn die Halteeinheit zumindest ein Rastelement aufweist, kann eine Montage der Adaptereinheit an die Basiseinheit vorteilhaft vereinfacht werden. Vorzugsweise umfasst die Halteeinheit zumindest zwei Rastelemente, insbesondere zumindest ein Rastelement für jede der zwei Seitenflächen, wodurch die Montage besonders vorteilhaft vereinfacht werden kann. Unter einem "Rastelement" soll in diesem Zusammenhang insbesondere ein Element verstanden werden, welches dazu vorgesehen ist, in einem Zusammenwirken mit einem weiteren Rastelement eine Rastverbindung herzustellen. Vorzugsweise ist das Rastelement als ein Rasthaken ausgebildet, welcher insbesondere einen Teilbereich aufweist, der bei einem Rastvorgang in wenigstens eine Richtung, insbesondere eine zur Federleiste senkrechte Richtung, bewegt wird und/oder eine Erstreckung in wenigstens einer Richtung, insbesondere einer zur Federleiste senkrechten Richtung, verändert.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Es zeigen:
- Fig. 1: einen Teil einer Wischblattvorrichtung mit zwei Federleisten und einer an den Federleisten befestigten Basiseinheit in einer Schnittdarstellung,
- Fig. 2: den Teil der Wischblattvorrichtung in einer Draufsicht auf eine Formschlussausnehmung der Wischblattvorrichtung,
- Fig. 3: den Teil der Wischblattvorrichtung in einer weiteren Schnittdarstellung,
- Fig. 4: eine Adaptereinheit der Wischblattvorrichtung in einer Schnittdarstellung,
- Fig. 5: die Adaptereinheit in einer weiteren Schnittdarstellung,
- Fig. 6: die Adaptereinheit in einer Draufsicht auf ein zur Formschlussausnehmung korrespondierendes Formschlusselement,
- Fig. 7: einen Montageschritt der Adaptereinheit an der Basiseinheit und
- Fig. 8: ein Wischblatt mit der Wischblattvorrichtung in einer Schnittdarstellung.

### Beschreibung des Ausführungsbeispiels

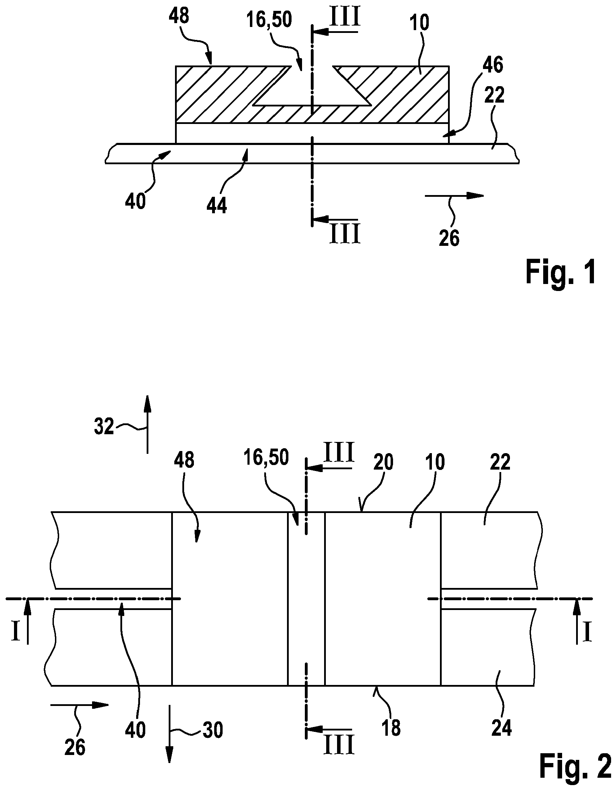

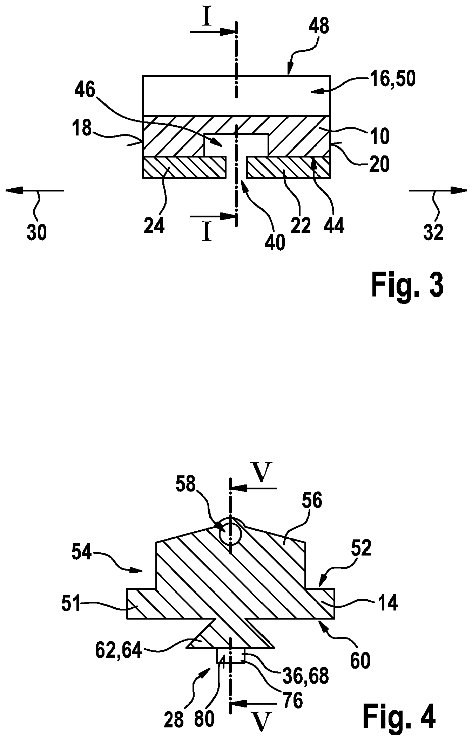

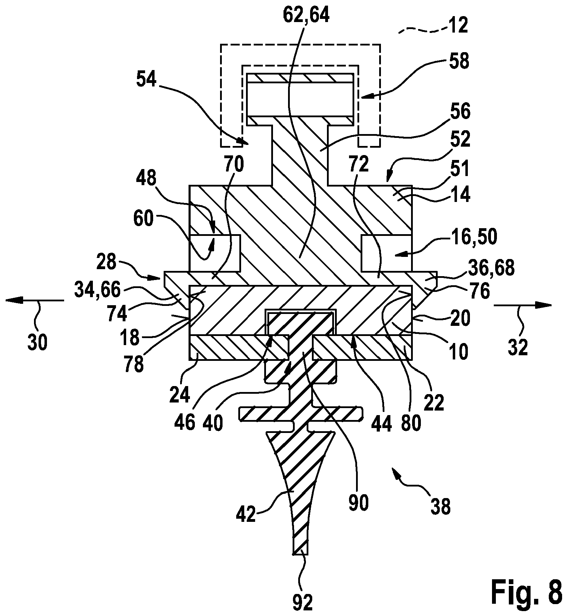

Figur 1 zeigt einen Teil einer Wischblattvorrichtung in einer Schnittdarstellung entlang einer Linie I-I in Figur 2 und einer Linie I-I in Figur 3. Figur 2 zeigt den Teil der Wischblattvorrichtung in einer Draufsicht von oben. Figur 3 zeigt den Teil der Wischblattvorrichtung in einer weiteren Schnittdarstellung entlang einer Linie III-III in Figur 1 und einer Linie III-III in Figur 2. Die Wischblattvorrichtung umfasst zwei Federleisten 22, 24 und eine Basiseinheit 10. Die Federleisten 22, 24 bestehen aus Federstahl. Die Federleisten 22, 24 sind in einem montierten Zustand parallel zueinander und beabstandet angeordnet. Zwischen den Federleisten 22, 24 ist ein Aufnahmebereich 40 für eine Wischleiste 42 eines Wischblatts 38 vorgesehen (vgl. Figur 8). Die Basiseinheit 10 ist im montierten Zustand an den Federleisten 22, 24 befestigt. Die Basiseinheit 10 ist einstückig ausgebildet. Die Basiseinheit 10 besteht aus Metall. Die Basiseinheit 10 ist im montierten Zustand mittels einer Schweißverbindung mit den Federleisten 22, 24 verbunden. In einem Bereich oberhalb des Aufnahmebereichs 40 weist die Basiseinheit 10 an einer im montierten Zustand den Federleisten 22, 24 zugewandten Unterseite 44 eine Ausnehmung 46 auf, welche zu einer Aufnahme eines Teils der Wischleiste 42 vorgesehen ist (vgl. Figur 8). An einer der Unterseite 44 gegenüberliegenden Oberseite 48 weist die Basiseinheit 10 eine Formschlussausnehmung 16 auf. Die Formschlussausnehmung 16 erstreckt sich von einer ersten Seitenfläche 18 der Basiseinheit 10 zu einer zweiten Seitenfläche 20 der Basiseinheit 10. Bei den Seitenflächen 18, 20 handelt es sich um ebene äußere Oberflächen der Basiseinheit 10. Die Seitenfläche 18, 20 sind voneinander beabstandet und parallel zueinander angeordnet. Die Seitenflächen 18, 20 sind zwischen der Oberseite 48 und der Unterseite 44 der Basiseinheit 10 angeordnet. Die Seitenflächen 18, 20 sind parallel zu einer Längsrichtung 26 der Federleisten 22, 24 angeordnet. Die Formschlussausnehmung 16 ist zumindest im Wesentlichen kanalförmig ausgebildet. Die Formschlussausnehmung 16 ist geradlinig zwischen den Seitenflächen 18, 20 angeordnet. Die Formschlussausnehmung 16 ist als eine Schwalbenschwanzführung 50 ausgebildet.

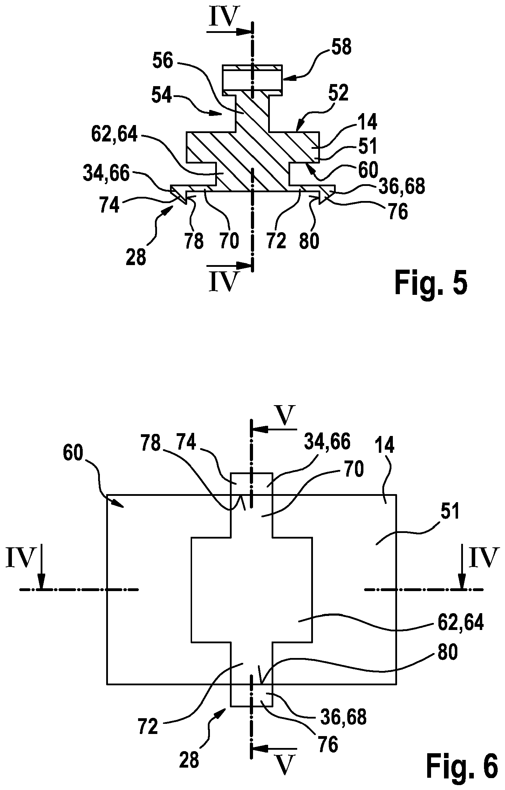

Figur 4 zeigt eine Adaptereinheit 14 der Wischblattvorrichtung in einer Schnittdarstellung entlang einer Linie IV-IV in Figur 5 und einer Linie IV-IV in Figur 6. Figur 5 zeigt die Adaptereinheit 14 in einer weiteren Schnittdarstellung entlang einer Linie V-V in Figur 4 und einer Linie V-V in Figur 6. Figur 6 zeigt die Adaptereinheit 14 in einer Draufsicht von unten. Die Adaptereinheit 14 ist einstückig ausgebildet. Die Adaptereinheit 14 besteht aus Kunststoff. Die Adaptereinheit 14 weist eine Trägerplatte 51 auf. Die Adaptereinheit 14 weist an einer Oberseite 52 der Trägerplatte 51 einen Lagerbereich 54 zu einer drehbaren Verbindung mit einem Wischarm 12 auf (vgl. schematische Darstellung in Figur 8). Die Adaptereinheit 14 weist im Lagerbereich 54 einen Lagersteg 56 und an dessen äußerem Ende eine Lageröffnung 58 auf. Die Lageröffnung 58 bildet zusammen mit einem Lagerelement des Wischarms 12 ein Drehlager (nicht dargestellt). An einer der Oberseite 52 gegenüberliegenden Unterseite 60 der Trägerplatte 51 umfasst die Adaptereinheit 14 ein Formschlusselement 62. Das Formschlusselement 62 ist zur Formschlussausnehmung 16 korrespondierend ausgebildet. Das Formschlusselement 62 ist als ein Schwalbenschwanz 64 ausgebildet. Entlang jeweils einer Symmetrieachse betrachtet ist das Formschlusselement 62 kürzer ausgebildet als die Formschlussausnehmung 16. Die Adaptereinheit 14 umfasst eine Halteeinheit 28, welche im montierten Zustand die Adaptereinheit 14 relativ zur Basiseinheit 10 in beiden, zu den Seitenflächen 18, 20 senkrechten Richtungen 30, 32 fixiert (vgl. Figur 8). Die Halteeinheit 28 umfasst hierzu zwei Rastelemente 34, 36. Die Rastelemente 34, 36 sind als Rasthaken 66, 68 ausgebildet. Die Rastelemente 34, 36 sind am Formschlusselement 62 angeformt. Die Rasthaken 66, 68 weisen jeweils einen Federsteg 70, 72 und daran anschließend eine Rastnase 74, 76 auf. Die Rastnasen 74, 76 weisen eine von außen nach innen zunehmende Materialstärke auf. Die Rastnasen 74, 76 weisen jeweils eine von der Unterseite 60 weg und nach außen gerichtete Auflaufschräge auf. Die Rastnasen 74, 76 weisen jeweils eine zum Formschlusselement 62 hin gerichtete Haltefläche 78, 80 auf. Die Halteflächen 78, 80 sind senkrecht zur Unterseite 60 der Trägerplatte 51 der Adaptereinheit 14 ausgerichtet. Die Halteflächen 78, 80 weisen einen Abstand auf, welcher einem Abstand der ersten Seitenfläche 18 von der zweiten Seitenfläche 20 entspricht (vgl. Figur 8). Die Rastelemente 34, 36 sind jeweils mit ihren Federstegen 70, 72 an einem unteren, von der Unterseite 60 abgewandten Ende des Formschlusselements 62 angeordnet. Die Rastelemente 34, 36 sind entlang einer Spiegelsymmetrieebene des Formschlusselements 62 beidseitig vom Formschlusselement 62 angeordnet.

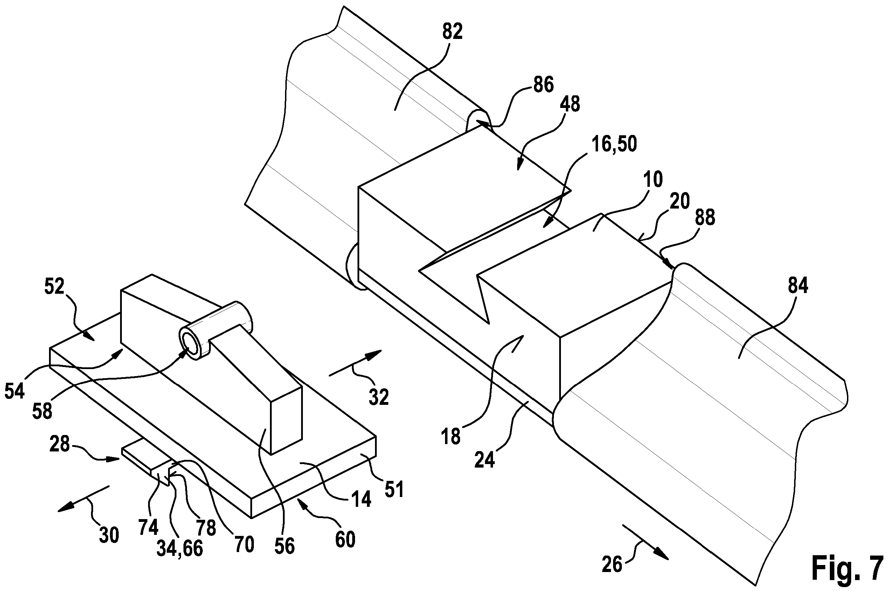

Figur 7 zeigt einen Montageschritt der Adaptereinheit 14 an die Basiseinheit 10. Bei einer Montage der Adaptereinheit 14 an die Basiseinheit 10 wird das Formschlusselement 62 der Adaptereinheit 14 entweder in die Richtung 30 oder in die Richtung 32 in die Formschlussausnehmung 16 der Basiseinheit 10 eingeführt. Hierzu muss zunächst der Federsteg 70, 72 des jeweiligen Rastelements 34, 36 in Richtung der Unterseite 60 der Trägerplatte 51 der Adaptereinheit 14 verformt werden. Sobald das Formschlusselement 62 mittig in die Formschlussausnehmung 16 eingeschoben ist, rastet das jeweilige Rastelement 34, 36 an der jeweiligen Seitenfläche 18, 20 der Basiseinheit 10 ein (vgl. Figur 8). In Figur 7 sind ferner zwei Spoilerelemente 82, 84 des Wischblatts 38 gezeigt. Die Spoilerelemente 82, 84 sind im montierten Zustand beidseitig auf die Federleisten 22, 24 aufgeschoben und liegen mit jeweils einer Stirnseite 86, 88 an der Basiseinheit 10 an. Die Wischleiste 42 ist der Übersichtlichkeit halber in Figur 7 nicht dargestellt.

Figur 8 zeigt das montierte Wischblatt 38 mit der Wischblattvorrichtung in einer Schnittdarstellung, welche den Schnittdarstellungen der Figuren 3 und 5 entspricht. Im montierten Zustand liegen die Halteflächen 78, 80 der Rastelemente 34, 36 der Adaptereinheit 14 an den Seitenflächen 18, 20 der Basiseinheit 10 an. Die mit dem Wischarm 12 verbindbare Adaptereinheit 14 ist formschlüssig an der Basiseinheit 10 fixiert. Die Wischleiste 42 weist ein in einem Querschnitt betrachtet zumindest im Wesentlichen H-förmiges Halteelement 90 auf welches sich parallel zu einer Wischlippe 92 der Wischleiste 42 erstreckt. Ein Mittelsteg des Halteelements 90 ist im montierten Zustand im Aufnahmebereich 40 zwischen den Federleisten 22, 24 angeordnet. Das Halteelement 90 umgreift die Federleisten 22, 24 zumindest teilweise. Ein H-Schenkel des Halteelements 90 ist im montierten Zustand in der Ausnehmung 46 der Basiseinheit 10 angeordnet.

In alternativen Ausgestaltungen ist auch denkbar, dass eine Formschlussausnehmung an einer Adaptereinheit und ein korrespondierendes Formschlusselement an einer Basiseinheit angeordnet sind. Ferner ist eine beliebige, dem Fachmann als sinnvoll erscheinende Halteeinheit denkbar. So können beispielsweise Rastelemente einer Halteeinheit anstatt an einer Adaptereinheit auch an einer Basiseinheit angeordnet sein. Des Weiteren kann eine von einer hier beschriebenen Ausgestaltung verschiedene Ausgestaltung eines Lagerbereichs einer Adaptereinheit denkbar sein, wenn die Adaptereinheit zu einem Anschluss an einen alternativen Wischarm vorgesehen ist. So können insbesondere für verschiedenen Typen von Wischarmen, insbesondere für verschiedenen Typen von Wischarmadaptern der Wischarme, verschiedene Adaptereinheiten vorgesehen sein, welche sich in ihren Lagerbereichen unterscheiden.

## Patentansprüche

1. ischblattvorrichtung mit einer Basiseinheit (10) und einer mit einem Wischarm (12) verbindbaren Adaptereinheit (14), welche in wenigstens einem montierten Zustand formschlüssig an der Basiseinheit (10) fixiert ist, wobei wenigstens eine Formschlussausnehmung (16), welche sich zumindest von einer ersten Seitenfläche (18) zu einer von der ersten Seitenfläche (18) beabstandeten zweiten Seitenfläche (20) der Basiseinheit (10) oder der Adaptereinheit (14) erstreckt, wobei es sich bei den Seitenflächen (18, 20) um außenliegende Seitenflächen (18, 20) der Basiseinheit (10) oder der Adaptereinheit (14) handelt, **dadurch gekennzeichnet, dass** die Formschlussausnehmung (16) zumindest im Wesentlichen als eine Schwalbenschwanzführung (50) zur Verbindung zwischen der Adaptereinheit (14) und der Basiseinheit (10) ausgebildet ist.

2. Wischblattvorrichtung nach Anspruch 1, **gekennzeichnet durch** zumindest eine Federleiste (22, 24), mit welcher die Basiseinheit (10) in wenigstens einem montierten Zustand zumindest im Wesentlichen fest verbunden ist.

3. Wischblattvorrichtung nach Anspruch 2, **dadurch gekennzeichnet, dass** wenigstens eine der zwei Seitenfläche (18, 20) zumindest im Wesentlichen parallel zu einer Längsrichtung (26) der Federleiste (22, 24) angeordnet ist.

4. Wischblattvorrichtung nach einem der vorhergehenden Ansprüche, **dadurch gekennzeichnet, dass** die Formschlussausnehmung (16) zumindest im Wesentlichen kanalförmig ausgebildet ist.

5. Wischblattvorrichtung nach einem der vorhergehenden Ansprüche, **dadurch gekennzeichnet, dass** die Formschlussausnehmung (16) in wenigstens einem montierten Zustand an der Basiseinheit (10) angeordnet ist.

6. Wischblattvorrichtung nach einem der vorhergehenden Ansprüche, **gekennzeichnet durch** eine Halteeinheit (28), welche in zumindest einem montierten Zustand die Adaptereinheit (14) relativ zur Basiseinheit (10) in zumindest einer zu wenigstens einer der Seitenflächen (18, 20) zumindest im Wesentlichen senkrechten Richtung (30, 32) wenigstens teilweise fixiert.

7. Wischblattvorrichtung nach Anspruch 6, **dadurch gekennzeichnet, dass** die Halteeinheit (28) zumindest ein Rastelement (34, 36) aufweist.

8. Wischblatt (38) mit einer Wischblattvorrichtung nach einem der vorhergehenden Ansprüche.

## Claims

1. Wiper blade device with a base unit (10) and an adapter unit (14) which is connectable to a wiper arm (12) and, in at least one mounted state, is fixed in a form-fitting manner to the base unit (10), wherein at least one form-fitting recess (16) which extends at least from a first side surface (18) to a second side surface (20) of the base unit (10) or of the adapter unit (14) that is spaced apart from the first side surface (18), wherein the side surfaces (18, 20) are external side surfaces (18, 20) of the base unit (10) or of the adapter unit (14), **characterized in that** the form-fitting recess (16) is designed at least substantially as a dovetail guide (50) for connection between the adapter unit (14) and the base unit (10).

2. Wiper blade device according to Claim 1, **characterized by** at least one spring strip (22, 24) to which the base unit (10) is at least substantially fixedly connected in at least one mounted state.

3. Wiper blade device according to Claim 2, **characterized in that** at least one of the two side surfaces (18, 20) is arranged at least substantially parallel to a longitudinal direction (26) of the spring strip (22, 24).

4. Wiper blade device according to one of the preceding claims, **characterized in that** the form-fitting recess (16) is of at least substantially channel-shaped design.

5. Wiper blade device according to one of the preceding claims, **characterized in that** the form-fitting recess (16) is arranged on the base unit (10) in at least one mounted state.

6. Wiper blade device according to one of the preceding claims, **characterized by** a holding unit (28) which, in at least one mounted state, at least partially fixes the adapter unit (14) relative to the base unit (10) in at least one direction (30, 32) which is at least substantially perpendicular to at least one of the side surfaces (18, 20).

7. Wiper blade device according to Claim 6, **characterized in that** the holding unit (28) has at least one latching element (34, 36).

8. Wiper blade (38) with a wiper blade device according to one of the preceding claims.

## Revendications

1. Dispositif de balai d'essuie-glace comprenant une unité de base (10) et une unité d'adaptateur (14) pouvant être connectée à un bras d'essuie-glace (12), laquelle est fixée, dans au moins un état monté, par engagement par correspondance de formes à l'unité de base (10), dans lequel au moins un évidement d'engagement par correspondance de formes (16) qui s'étend au moins depuis une première surface latérale (18) jusqu'à une deuxième surface latérale (20) de l'unité de base (10) ou de l'unité d'adaptateur (14), espacée de la première surface latérale (18), les surfaces latérales (18, 20) étant des surfaces latérales situées à l'extérieur (18, 20) de l'unité de base (10) ou de l'unité d'adaptateur (14), **caractérisé en ce que** l'évidement d'engagement par correspondance de formes (16) est réalisé au moins essentiellement sous forme de guide en queue d'aronde (50) pour la connexion entre l'unité d'adaptateur (14) et l'unité de base (10).

2. Dispositif de balai d'essuie-glace selon la revendication 1, **caractérisé par** au moins une baguette élastique (22, 24) à laquelle l'unité de base (10) est au moins essentiellement connectée fixement dans au moins un état monté.

3. Dispositif de balai d'essuie-glace selon la revendication 2, **caractérisé en ce qu'**au moins l'une des deux surfaces latérales (18, 20) est disposée au moins essentiellement parallèlement à une direction longitudinale (26) de la baguette élastique (22, 24).

4. Dispositif de balai d'essuie-glace selon l'une quelconque des revendications précédentes, **caractérisé en ce que** l'évidement d'engagement par correspondance de formes (16) est réalisé au moins essentiellement sous forme de canal.

5. Dispositif de balai d'essuie-glace selon l'une quelconque des revendications précédentes, **caractérisé en ce que** l'évidement d'engagement par correspondance de formes (16) est disposé au niveau de l'unité de base (10) dans au moins un état monté.

6. Dispositif de balai d'essuie-glace selon l'une quelconque des revendications précédentes, **caractérisé par** une unité de retenue (28) qui, dans au moins un état monté, fixe au moins en partie l'unité d'adaptateur (14) par rapport à l'unité de base (10) dans au moins une direction (30, 32) au moins essentiellement perpendiculaire à au moins l'une des surfaces latérales (18, 20).

7. Dispositif de balai d'essuie-glace selon la revendication 6, **caractérisé en ce que** l'unité de retenue (28) présente au moins un élément d'encliquetage (34, 36).

8. Balai d'essuie-glace (38) comprenant un dispositif de balai d'essuie-glace selon l'une quelconque des revendications précédentes.
